(19) Europäisches Patentamt
European Patent Office
Office européen des brevets

(11) Numéro de publication: **0 192 508 B1**

(12) **FASCICULE DE BREVET EUROPEEN**

(45) Date de publication du fascicule du brevet: **13.07.88**

(51) Int. Cl.⁴: **C 08 F 20/30**

(21) Numéro de dépôt: **86400093.0**

(22) Date de dépôt: **17.01.86**

(54) **Polymères réticulables a base d'esters insaturés de l'acide furoique, leur procédé de préparation et leur application à la fabrication de revêtements.**

(30) Priorité: **25.01.85 FR 8501040**

(43) Date de publication de la demande: **27.08.86 Bulletin 86/35**

(45) Mention de la délivrance du brevet: **13.07.88 Bulletin 88/28**

(84) Etats contractants désignés: **AT BE DE FR GB IT NL SE**

(56) Documents cités:
**DE - B - 1 201 554**
**FR - A - 2 076 127**

(73) Titulaire: **RHONE-POULENC CHIMIE, 25, quai Paul Doumer, F-92408 Courbevoie Cédex (FR)**

(72) Inventeur: **Reeb, Roland, 2, Allée des Pléiades, Gressy-en-France F-77410 Claye Souilly (FR)**
Inventeur: **Chauvel, Bernard, 24, Chemin de la Commanderie, F-95120 Ermont (FR)**

(74) Mandataire: **Fabre, Madeleine-France et al, RHONE-POULENC INTERSERVICES Service Brevets Chimie 25, quai Paul Doumer, F-92408 Courbevoie Cédex (FR)**

**EP 0 192 508 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet des polymères et des copolymères réticulables à froid d'esters insaturés de l'acide furoïque, à savoir les acrylates et les alkylacrylates d'alkylfuroate, ainsi que les latex desdits polymères ou copolymères, leur procédé de préparation et leur application comme liants ou à la fabrication de revêtements.

Les polymères et copolymères réticulables faisant l'objet de l'invention sont caractérisés en ce qu'ils sont constitués de:

. 1 à 100% de motifs dérivés d'un ester insaturé de l'acide furoïque de formule:

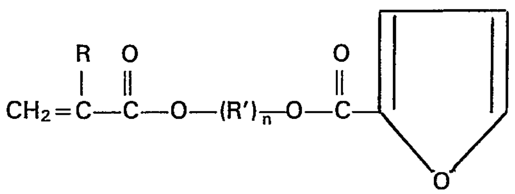 (I)

où

. R représente de l'hydrogène ou un groupe alkyle en $C_1$-$C_2$ et de préférence en $C_1$

. R' représente un radical alkylène linéaire ou ramifié en $C_1$-$C_5$ et de préférence en $c_2$-$c_4$

. n représente un nombre entier de 1 à 4 et de préférence égal à 1

. et 0 à 99% de motifs dérivés d'au moins un monomère insaturé copolymérisable avec ledit ester insaturé de formule I.

Lorsque l'invention vise des copolymères réticulables, ceux-ci sont de préférence constitués de:

. 1 à 50% de motifs dérivés d'ester insaturé de l'acide furoïque de formule (I)

. et de 50 à 99% de motifs dérivés d'au moins un monomère insaturé copolymérisable avec ledit ester insaturé de formule (I).

On dénommera ci-après par «polymères» aussi bien les homopolymères des esters insaturés de formule I que leurs copolymères.

On dénommera ci-après par «polymères réticulables» des «polymères» non encore réticulés ou déjà partiellement autoréticulés en cours de polymérisation.

Parmi les esters insaturés de formule I, on peut citer en particulier l'acrylate et le méthacrylate de 2-éthyl furoyle, les acrylates et métacrylates d'isopropylfuroyle.

Ces esters insaturés de formule (I) peuvent être obtenus par réaction d'un acrylate, méthylacrylate ou éthylacrylate d'hydroxyalkyle de formule:

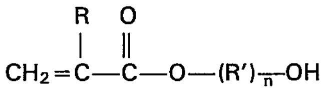 (II)

où R, R' et n ont la signification donnée ci-dessus, avec un halogénure de furoyle, les quantités de réactifs mises en œuvre correspondant à un rapport molaire halogénure de furoyle/réactif de formule (II) compris entre la stoechiométrie et un excès de 10% de l'un ou l'autre des réactifs par rapport à la stoechiométrie.

Parmi les réactifs de formule (II) pouvant être mis en œuvre, on peut citer en particulier: les acrylates ou méthacrylates de 2-hydroxyéthyle, 2-hydroxypropyle, 2-hydroxy-1-méthyléthyle, 3-hydroxypropyle, 2-hydroxy-1-éthyléthyle, 4-hydroxybutyle, ...

Parmi les halogénures de furoyle, on peut citer le bromure de furoyle et tout particulièrement le chlorure de furoyle.

Pour une bonne mise en œuvre du procédé, ladite réaction est réalisée à une température comprise entre 0 et 40°C, de préférence entre 5 et 20°C, en présence d'un catalyseur piégeant l'hydracide formé et d'un solvant commun à l'halogénure de furoyle et au réactif de formule II.

Parmi les catalyseurs pouvant être mis en œuvre, on peut citer les amines tertiaires ne possèdant pas d'hydrogène labile, telles que les trialkylamines présentant des radicaux alkyles en $C_1$-$C_6$, les N,N dialkylanilines présentant des radicaux alkyles en $C_1$-$C_2$, les alkylène polyamines tertiaires (triéthy lènediamine, N,N,N',N'-tétraméthyléthylènediamine, N,N,N',N'-tétraméthyl-1,3 butanediamine ...), les amines tertiaires aromatiques telles que la pyridine, les méthylpyridines ...

La quantité de catalyseur pouvant être mise en œuvre correspond à un rapport molaire catalyseur/hydracide formé compris entre la stoechiométrie et un excès de 10% par rapport à la stoechiométrie.

Parmi les solvants pouvant être mis en œuvre, on peut citer: la pyridine, les solvants aromatiques (benzène, toluène, xylène ...), les solvants aliphatiques chlorés (dichlorométhane, choloforme, tétrachlorure de carbone, 1-2 dichloréthane ...).

Ceux-ci sont mis en œuvre en quantité au moins suffisante pour dissoudre les réactifs.

Il est tout particulièrement intéressant d'utiliser de la pyridine puisque celle-ci joue à la fois le rôle de catalyseur et celui de solvant.

La réaction se déroule généralement en une ou deux heures.

Le catalyseur et le solvant sont ensuite séparés de l'ester recherché; cette opération peut être réalisée en acidifiant à froid le milieu réactionnel à l'aide d'un acide minéral tel que l'acide chlorhydrique, l'acide sulfurique, l'acide perchlorique ...

Ainsi, l'acidification peut être réalisée à une température voisine de 0°C à l'aide d'un excès d'acide par rapport à la quantité de catalyseur n'ayant par réagi, cet excès pouvant aller jusqu'à 100% par rapport à la stoechiométrie.

L'ester recherché est ensuite séparé par exemple par décantation, puis purifié par exemple par lavage à l'eau.

Parmi les monomères insaturés copolymérisables avec lesdits esters insaturés de formule I, on peut citer:

. les diènes conjugués tels que: le butadiène, l'isoprène, le chloroprène, le 1-3 pentadiène, le diméthylbutadiène, ...

. les monomères acryliques ou méthacryliques tels que: l'acrylonitrile, le méthacrylonitrile, les acrylates ou méthacrylates de méthyle, éthyle, propyle, isopropyle, butyle, 2-éthylhexyle, hydroxyéthyle, hydroxypropyle, glycidyle ...

. les halogénures de vinyle ou de vinylidène tels que le chlorure de vinyle ou de vinylidène

. Les monomères vinylaromatiques tels que: le styrène, l'α méthylstyrène, le vinylstyrène, le monochlorostyrène ...

. les esters vinyliques d'acides carboxyliques tels que l'acétate de vinyle, le propionate de vinyle, le versatate de vinyle, le butyrate de vinyle ...

. Les mono- ou di-acides carboxyliques présentant une ou des insaturations éthyléniques tels que: les acides acryliques, méthacrylique, crotonique, maléïque, fumarique, itaconique ...

. les acides sulfoniques insaturés tels que le vinylsulfonate de sodium.

Les polymères réticulables faisant l'objet de l'invention présentent généralement une masse moléculaire en nombre de l'ordre de 10 000 à 300 000, de préference de l'ordre de 50 000 à 200 000.

Ils présentent une température de transition vitreuse $T_h$ faible, généralement inférieure à la température ambiante.

Les polymères réticulables de l'invention possèdent la caractéristique de s'autoréticuler à température ambiante à l'oxygène atmosphérique.

Ce phénomène d'autoréticulation peut être accéléré ou accentué par traitement thermique, par réaction à l'aide de radicaux libres provenant d'initiateurs péroxydiques (éventuellement en présence d'agents siccatifs) ou azoïques par exemple, ou par réaction photochimique par des U.V. par exemple; ils peuvent alors présenter un taux de réticulation correspondant à un taux de gel de l'ordre de 70% à 100% et un indice de gonflement de l'ordre de 0 à 30 mesurés selon les méthodes indiquées ci-après dans les exemples.

Les polymères faisant l'objet de l'invention peuvent être obtenus par tout mode de polymérisation, par exemple par polymérisation en solution, en suspension, en émulsion.

Ainsi, ils peuvent être obtenus par polymérisation en solution d'une composition monomère constituée de:

. 1 à 100% dudit ester insaturé de l'acide furoïque de formule (I)

. et 0 à 99% d'au moins un désdits monomères insaturés copolymérisables avec ledit ester de formule I dans un solvant du polymère recherché, en présence d'un amorceur compatible avec ledit solvant et éventuellement d'un agent de transfert de chaîne.

Lorsqu'il s'agit de préparer un copolymère, on pourra de préférence mettre en œuvre de:

. 1 à 50% dudit ester insaturé de l'acide furoïque de formule (I)

. et 50 à 99% dudit monomère insaturé copolymérisable avec l'ester de formule (I).

L'ester insaturé de formule I et le(s) monomère(s) éventuel(s) pouvant être mis en œuvre sont ceux déjà cités ci-dessus; ils peuvent être introduits dans le milieu réactionnel, soit avant le début de la polymérisation en une seule fois, soit au cour de la polymérisation par fractions successives ou en continu, la nature de la composition monomère n'étant pas nécessairement constante pendant toute la durée d'introduction par fraction ou en continu.

Parmi les solvants pouvant être mis en œuvre, on peut citer les cétones telles qu'acétone, méthyléthylcétone, méthylisobutylcétone; les solvants aromatiques tels que benzène, toluène, xylène; les solvants aliphatiques ou cycloaliphatiques tels que hexane, choloforme, dichlorométhane, tétrachlorure de carbone, dichloréthane, cyclohexane, méthylcyclohexane; le tétrahydrofuranne, la diméthylformamide.

Le solvant chosi est fonction du polymère recherché. Ainsi, pour obtenir un polymère dont plus de 50% environ des motifs dérivent d'un monomère insaturé copolymérisable avec l'ester de formule I, on choisira un solvant de préférence parmi les solvants aromatiques, les solvants chlorés et le tétrahydrofuranne.

La quantité de solvant pouvant être mise en œuvre est telle que le concentration de la composition monomère dans ledit solvant est comprise entre 0,5 et 75% en poids et de préférence entre 25 et 50%.

L'amorceur compatible avec ledit solvant est de préférence choisi parmi: les péroxydes organiques tels que le péroxyde de benzoyle, le péroxyde de lauroyle, le péroxyde de diisopropylbenzène, le péroxyde de méthyléthylcétone; les hydropéroxydes tels que l'eau oxygénée, l'hydropéroxyde de cumène, l'hydropéroxyde de diisopropylbenzène, les perestes tels que le perbenzoate de tertiobutyle; les percarbonates tels que les peroxydicarbonates de dibutyle, de bis(2-éthylhexyle) ou de diisopropyle; ceux-ci peuvent être associés à un réducteur tel que le bisulfite ou le formaldehydesulfoxylate de sodium, les polyéthylèneamines, les sucres, les sels métalliques; les initiateurs azoaliphatiques tels que l'azobis isobutyronitrile, le 2,2'azobis(2,4 diméthyl-valéronitrile), le 2,2'azobis(2,4 diméthyl-4 méthoxyvaléronitrile).

La quantité d'amorceur mise en œuvre est fonction de la nature de la composition monomère et de la température de polymérisation; cette quantité peut être comprise entre 0,01 et 5% en poids par rapport à la composition monomère et de préférence entre 0,5 et 3%.

Comme exemples d'agents de transfert de chaîne, on peut citer: les mercaptans tels que le n-butyl-, n-octyl-, n-lauryl-, t-dodécyl-mercaptan; des dérivés halogénés tels que le tétrabromure de carbone, le bromoforme .... Ils peuvent être utilisés en quantités allant de 0 à 3% environ en poids par rapport à la composition monomère.

L'opération de polymérisation dure généralement de 1 à 24 h, cette durée étant bien entendu fonction de la nature de la composition monomère, de la concentration et la nature de l'amorceur et de la température de polymérisation.

Si nécessaire, les polymères obtenus peuvent ensuite être séparés du solvant, par exemple par évaporation du solvant si celui-ci est volatile ou par précipitation du polymère dans un liquide non-solvant dudit polymère, liquide tel que les alcools à chaîne courte, méthanol, éthanol, isopropanol par exemple ou les hydrocarbures saturés tels que hexane, heptane, éther de pétrole, cyclohexane ...

La présente invention a également pour objet des dispersions aqueuses ou latex desdits polymères

réticulables ci-dessus décrits, le taux d'extrait sec desdites dispersions (c'est-à-dire le taux de particules de polymère réticulable) allant de 1 à 65% en poids et de préférence de 45 à 55% en poids. Elles sont constituées de particules de polymère réticulable en dispersion dans l'eau, de diamètre de l'ordre de 0,05 à 3 µm et de préférence de l'ordre de 0,1 à 0,2 µm.

Lesdites dispersions aqueuses peuvent être obtenues par polymérisation en émulsion d'une composition monomère constituée de:

. 1-100% d'un ester insaturé de l'acide furoïque de formule I

. et 0-99% d'au moins un des monomères insaturés ci-dessus cités copolymérisables avec ledit ester de formule I, en présence d'un amorceur hydrosoluble et éventuellement d'un émulsifiant.

Lorsqu'il s'agit de préparer une dispersion de copolymères, on pourra mettre en œuvre de préférence de:

. 1 à 50% d'ester insaturé de l'acide furoïque de formule (I)

. et 50 à 99% dudit monomère insaturé, copolymérisable avec l'ester de formule (I).

L'ester insaturé de formule I et le(s) monomère(s) éventuels pouvant être mis en œuvre sont ceux déjà cités ci-dessus; ils peuvent être introduits dans le milieu réactionnel, soit avant le début de la polymérisation en une seule fois, soit au cours de la polymérisation par fractions successives ou en continu, la nature de la composition monomère n'étant pas nécessairement constante pendant toute la durée d'introduction par fractions ou en continu.

L'amorceur hydrosoluble est représenté plus particulièrement par les hydropéroxydes tels que l'eau oxygénée, l'hydropéroxyde de cumène, l'hydropéroxyde de diisopropylbenzène, et par les persulfates tels que le persulfate de sodium, le persulfate de potassium, le persulfate d'ammonium.

Il est employé en quantités comprises entre 0,05 et 2% en poids par rapport au poids de la composition monomère. Ces amorceurs sont éventuellement associés à un réducteur, tel que le bisulfite ou le formaldéhydesulfoxylate de sodium, les polyéthylèneamines, les sucres: dextrose, saccharose, les sels métalliques. Les quantités de réducteur utilisées varient de 0 à 3% en poids par rapport au poids de la composition monomère.

En tant qu'agent émulsifiant éventuel, on peut mettre en œuvre les agents anioniques classiques représentés notamment par les sels d'acides gras, les alkylsulfates, les alkylsulfonates, les arylsulfates, les arylsulfonates, les alkylarylsulfates, les alkylarylsulfonates, les sulfosuccinates, les alkylphosphates de métaux alcalins, les sels de l'acide abiétique hydrogénés ou non, les agents non-ioniques tels que les alcools gras polyéthoxylés, les alkylphénols polyéthoxylés, les acides gras polyéthoxylés ... Ils sont employés à raison de 0,01 à 5% en poids par rapport au poids de la composition monomère.

Un agent de transfert de chaîne peut éventuellement être mis en œuvre dans des proportions allant de 0 à 3% en poids par rapport à la composition monomère, il est généralement choisi parmi les mercaptans tels que le N-dodécylmercaptan, le tertiododécylmercaptan; le cyclohexène; les hydrocarbures halogénés tels que le chloroforme, le bromoforme, le tétrachlorure de carbone, le tétrabromure de carbone; les dimères de l'α méthylstyrène.

La température de polymérisation fonction de la nature de la composition monomère et de l'amorceur mis en œuvre est généralement comprise entre 0 et 110°C, de préférence entre 20 et 90°C.

L'opération de polymérisation dure généralement de 1 à 24 h; cette durée est bien entendu fonction de la nature de la composition monomère, de l'initiateur et de la température.

Les dispersions aqueuses ainsi obtenus, bien que possédant une température de transition vitreuse Tg faible, généralement inférieure à la température ambiante, conduisent à des films, qui tout en gardant une bonne souplesse à basse température, possèdent grâce à l'autoréticulation du polymère du latex par l'oxygène de l'air une dureté superficielle et une ténacité notables ainsi qu'une insensibilité à l'eau et aux solvants importante.

Si nécessaire, les particules de polymères réticulables peuvent être séparées du milieu aqueux par tout moyen connu tel que évaporation de l'eau, coagulation par ajoût de sels alcalins ou par ajoût d'acides forts, coagulation à basse température, précipitation du polymère réticulable dans un liquide non-solvant du polymère et miscible à l'eau tel que les alcools à chaîne courte, l'acétonitrile ...

Les polymères réticulables et les dispersions aqueuses de polymères réticulables faisant l'objet de l'invention sont autoréticulables à température ordinaire; ils peuvent de ce fait être utilisés de manière intéressante comme matière première pour la fabrication de revêtements divers sur papier, métaux, bois, matières plastiques; ils peuvent ainsi servir à la fabrication de vernis, d'adhésifs, de produits d'étanchéification, comme liants pour des pigments ou pour des nappes de matières fibreuses.

Les exemples suivants sont donnés à titre indicatif et ne peuvent être considérés comme une limite du domaine et de l'esprit de l'invention.

*Exemple 1*

*Préparation d'un homopolymère de méthacrylate de 2-éthylfuroate*

On introduit dans un réacteur de 250 cc à double enveloppe et muni d'un agitateur à ancre:

— 50 g de toluène
— 50 g de méthacrylate de 2-éthylfuroate
— 1,5 g d'azobisdiméthylvaléronitrile (3% par rapport au monomère).

La solution obtenue est dégazée pendant 30 min à l'azote. La solution maintenue sous azote est portée à 65°C pendant 2 h 30; on obtient avec un rendement de 99,2% un gel de polymère dans le toluène, preuve d'un début de réticulation.

Le polymère formé présente un point de transition vitreuse Tg de 32°C environ.

Le méthacrylate de 2-éthylfuroate mis en œuvre dans cet exemple a été préparé de la manière suivante:

On introduit à une température de 25°C dans un réacteur de 2 l à double enveloppe avec circulation

d'un liquide réfrigérant, muni d'un agitateur à ancre, sous débit d'azote et en atmosphère anhydre

. 455 g (3,5 moles) de méthacrylate de mono-éthylène-glycol

. et 387 g (4,9 moles) de pyridine anhydre.

On ajoute alors doucement 503 g (3,85 moles) de chlorure de furoyle de manière à ne pas dépasser une température de 15°C. Cette température est maintenue constante pendant 1 heure, puis on laisse reposer la masse réactionnelle pendant 10 heures à température ambiante.

Le mélange réactionnel est ensuite coulé dans une solution aqueuse contenant 4,5 moles d'acide chlorhydrique ainsi que de la glace.

La phase organique constituée par l'ester recherché est séparée par décantation; elle est ensuite lavée avec une solution aqueuse à 10% de bicarbonate de sodium, puis de nouveau avec de l'eau jusqu'à neutralité.

On obtient après filtration un liquide visqueux incolore.

*Exemple 2-17*

On prépare selon le mode opératoire décrit à l'exemple 1 des copolymères de méthacrylate de 2-éthylfuroate et de styrène et/ou d'acrylate de butyle à partir de:

— toluène comme solvant
— méthacrylate de 2-éthylfuroate (MEF)
— styrène (S) et/ou acrylate de butyle (ABu)
— azobis diméthylvaléronitrile comme initiateur (3% en poids par rapport aux monomères)

Les quantités de réactifs mises en œuvre, la durée de polymérisation, le taux de conversion et la composition du polymère obtenu déterminée par analyse RMN du proton, figurent au tableau I.

*Exemple 18*

On prépare selon le mode opératoire décrit à l'exemple 1 un copolymère méthacrylate de 2-éthylfuroate-acrylate de butyle avec un rapport pondéral méthacrylate/acrylate de 55/45, à partir de:

— 50 g de toluène
— 12,5 g de méthacrylate de 2-éthylfuroate
— 12,5 g d'acrylate de butyle
— 0,75 g d'azobisdiméthylvaléronitrile comme initiateur.

Le copolymère obtenu, après 2 h 30 de polymérisation à 65°C, est entièrement soluble dans le toluène quand il n'est pas exposé à l'air. Il présente les caractéristiques suivantes:

— taux de méthacrylate: 45%
— taux d'acrylate de butyle: 55%
— temperature de transition vitreuse: Tg = −7°C; Δ Tg = 19°C.

*Potentialité de réticulation de ce copolymère*

Cette potentialité peut être déterminée par mesure du taux de réticulation du copolymère selon la méthode d'extraction des films par un solvant faisant intervenir les notions de taux gel et d'indice de gonflement.

On dissout le copolymère dans du chlorure de méthylène afin d'obtenir une solution à 10% en poids de copolymère, puis on prépare un film de 30 µm à l'aide d'un tire-film.

On opère l'extraction dans de la diméthylformamide sur 200 à 300 mg de film sec introduit au fond d'un panier en papier supporté par un porte-panier, déposé au fond d'un vase d'extraction de 70 ml.

L'ordre des opérations est le suivant:

1. On introduit l'ensemble panier + porte-panier dans le vase d'extraction contenant 35 ml de diméthylformamide.

On sorte l'ensemble panier + porte-panier au bout d'une demi-heure et on le place pendant 1 h dans un dessicateur saturé de vapeur de diméthylformamide; il est ensuite égoutté et pesé; on obtient un poids $T_1$. Après séchage à l'étuve à 100°C, l'ensemble panier + porte-panier est pesé à nouveau; on obtient un poids $T_2$.

2. On introduit 200 à 300 mg de film sec dans le panier en papier et on pèse l'ensemble panier + porte-panier; on obtient un poids $P_1$.

On introduit l'ensemble dans la vase d'extraction contenant 35 ml de diméthylformamide; le vase est agité pendant une dizaine d'heures.

L'ensemble panier-porte-panier est sorti, puis placé dans un dessiccateur saturé de vapeur de diméthylformamide pendant 1 h, puis pesé; on obtient un poids $P_2$. Après séchage à l'étuve à 100°C et pesée, on obtient un poids $P_3$.

*Le taux de gel T.G.* en % est calculé par la formule:

$$\text{T.G. en \%} = \frac{P_3 - T_2}{P_1 - T_2} \times 100$$

où $P_3 - T_2$ représente la masse sèche de gel après retrait de la totalité du solvant

$P_1 - T_2$ représente la masse de la prise d'essai (film).

*L'indice de gonflement I.G.* est calculé par la formule:

$$\text{I.G.} = \frac{P_2 - T_1}{P_3 - T_2}$$

où $P_2 - T_1$ représente la masse de gel gonflé de solvant

$P_3 - T_2$ représente la masse de gel séché.

Ces mesures ont été réalisées à partir des filmes a) à i) suivants:

a) film témoin non exposé à l'air
b) film exposé à l'air pendant 24 h à 25°C
c) film exposé à l'air pendant 14 jours à 25°C
d) film exposé à l'air pendant 27 jours à 25°C
e) film exposé à l'air pendant 2 heures à 100°C
f) film exposé à l'air pendant 7 h 30 à 100°C
g) film préparé à partir d'un polymère auquel ont été incorporés 2% de péroxyde de benzoyle et maintenu 2 heures à 100°C
h) film préparé à partir d'un polymère auquel ont été incorporés 1% de péroxyde de méthyléthylcétone et 0,4% d'octoate de cobalt et maintenu 24 heures à 25°C.

i) film préparé à partir d'un polymère auquel a été incorporé 0,8% d'octoate de cobalt et maintenu 24 heures à 25°C.

Les résultats de ces mesures figurent au tableau II.

*Exemple 19*

*Préparation d'un latex d'homopolymère de méthacrylate de 2-éthylfuroate*

On introduit dans un réacteur en verre de 500 ml muni d'un agitateur à ancre:
- 200 parties d'eau déionisée
- 1 partie de laurylsulfate de sodium
- 0,36 partie d'hydrogénophosphate de potassium
- 0,18 partie de dihydrogénophosphate de sodium
- 1 partie de persulfatee de potassium
- 100 parties de méthacrylate de 2-éthylfuroate.

Le mélange réactionnel est purgé à l'azote, puis chauffé à 40°C. On introduit ensuite pendant 4 heures une solution aqueuse de 0,5 partie de disulfite de sodium.

Après 6 heures de réaction, le latex est refroidi à température ambiante.

Le taux de transformation est de 99,5%.

Le latex obtenu présente les caractéristiques suivantes:
- quantité d'extrait sec: 33%
- diamètre moyen des grains: 0,13 µm
- pH: 7,2
- température de transition vitreuse du polymère: Tg = 34°C.

Ledit polymère obtenu n'est que partiellement soluble dans la diméthylformamide ou le tétrahydrofuranne; il est donc partiellement téticulé.

*Exemple 20-27*

Mode général de préparation de latex de copolymères d'ester insaturé de l'acide furoïque.

Dans un réacteur en verre de deux litres muni d'un agitateur ancre on introduit:
- 89 parties d'eau
- 0,1 partie d'alkylsulfonate de sodium
- 0,5 partie de vinylsulfonate de sodium.

Le mélange réactionnel est purgé à l'azote puis chauffé à 80°C. On introduit successivement:
- 0,2 partie de persulfate d'ammonium
- 99,5 parties de monomères sur 5 heures en continu
- 0,6 partie de persulfate d'ammonium dissous dans 7 parties d'eau sur 7 heures en continu.

Après 8 heures de polymérisation le latex est refroidi à température ambiante.

On réalise les essais 20 à 27 suivants:

— 20: essai témoin réalisé en l'absence de méthacrylate de 2-éthylfuroate, avec introduction en continu pendant 5 heures d'un mélange de styrène (S), acrylate du butyle (ABu) et d'acide acrylique (AA)

— 21: essai réalisé avec introduction en continu d'acide acrylique et de styrène entre 0 et 300 mn et introduction en continu de méthacrylate de 2-éthylfuroate (MEF) en continu entre 258 et 300 mn.

— 22: essai réalisé avec introduction en continu d'acide acrylique et d'acrylate de butyle entre 0 et 300 mn, addition en continu de styrène entre 0 et 120 mn et entre 270 mn et 300 mn et addition en continu de MEF entre 120 et 270 mn.

— 23: essai réalisé avec introduction en continu de styrène entre 0 et 120 mn et entre 270 et 300 mn, addition en continu d'acide acrylique et d'acrylate de butyle en continu entre 0 et 270 mn et addition en continu de MEF entre 120 et 270 mn.

— 24: essai réalisé avec introduction en continu de styrène, acrylate de butyle et d'acide acrylique selon un rapport pondéral S/ABu/AA de 45,7/50,3/4 entre 0 et 240 mn, et introduction en continu de styrène, acrylate de butyle, acide acrylique et méthacrylate de 2-éthylfuroate selon un rapport pondéral S/ABu/AA/MEF de 20,6/50,3/4/25,1 entre 240 et 300 mn.

— 25: essai analoque à l'essai 24 en remplaçant le méthacrylate de 2-éthylfuroate par la même quantité d'acrylate d'isopropylfuroate (APF).

— 26: essai réalisé avec introduction en continu de styrène, acrylate de butyle et acide acrylique selon un rapport pondéral S/ABu/AA de 45,7/50,3/4 pendant 0 à 180 mn et introduction en continu de styrène, acrylate de butyle, acide acrylique et méthacrylate de 2-éthylfuroate selon un rapport pondéral S/ABu/AA/MEF de 20,6/50,3/4/25,1 pendant 180-300 mn.

— 27: essai analogue à l'essai 26 en remplaçant le méthacrylate de 2-éthylfuroate par la même quantité d'acrylate d'isopropylfuroate.

Les quantités de monomères mises en œuvres et les caractéristiques des latex obtenus figurent aux tableaux III et III'.

L'acrylate d'isopropylfuroate mis en œuvre aux exemples 25 et 27 à été préparé de la manière suivante:

On introduit à une température de 25°C dans un réacteur de 2 l à double enveloppe avec circulation d'un liquide réfrigérant, muni d'un agitateur à ancre, sous débit d'azote et en atmosphère anhydre:

. 455 (3,5 moles) d'acrylate de monopropylèneglycol constitué d'environ 80% en poids d'acrylate de 2-hydroxy-2 méthyléthyle et 20% en poids d'acrylate de 2-hydroxy-1-méthyléthyle,

. et 387 g (4,9 moles) de pyridine anhydre.

On ajoute alors doucement 503 g (3,85 moles) de chlorure de furoyle de manière à ne pas dépasser une température de 5°C. Cette température est maintenue constante pendant encore 1 heure, puis on laisse reposer la masse réactionnelle pendant 10 heures à température ambiante.

Le mélange réactionnel est ensuite coulé dans une solution aqueuse contenant 4,5 moles d'acide chlorhydrique ainsi que de la glace.

La phase organique constituée par l'ester recherché est séparée par décantation; elle est ensuite lavée avec une solution aqueuse à 10% de bicarbonate de sodium, puis de nouveau avec de l'eau jusqu'à neutralité.

On obtient après filtration un liquide visqueux incolore.

*Potentialité de réticulation des latex des exemples 20, 22 et 23*

Les taux de gel T.G. en % et les indices de gonflement I.G. sont mesurés selon la méthode décrite à l'exemple 18.

Les mesures ont été réalisées à partir des films préparés à partir des latex des exemples 20, 22 et 23 et ayant subi les traitements k) à p) suivants:

k) film exposé à l'air pendant 24 h à 25°C
l) film exposé à l'air pendant 8 jours à 25°C
m) film exposé à l'air pendant 1 heure à 50°C
n) film exposé à l'air pendant 24 h à 50°C
o) film exposé à l'air pendant 1 h à 100°C
p) film exposé à l'air pendant 8 h à 100°C.

Les résultats figurent au tableau V.

Une détermination de la réticulation superficielle des films préparés à partir des latex des exemples 20-27 peut être obtenue par mesure de la durété PERSOZ suivant la norme AFNOR T 30-016.

Ces mesures ont été effectuées sur des films issus des latex des exemples 20 à 27 ayant subi des traitements thermiques (à 23°C, 50° ou 100°C) à l'air.

Les durées des traitements et le résultat des mesures figurent au tableau V.

Les propriétés viscoélastiques des films permettent également d'estimer leur niveau de réticulation après traitement à l'air.

La mesure du module élastique a été réalisée à l'aide du RHEOMETRIX MS 7200, à partir des latex des exemples 20 à 23.

Le principe de la mesure consiste à placer un film de polymère d'épaisseur h entre deux disques de rayon R dont les axes sont décalés l'un par rapport à l'autre d'une valeur a.

On applique une vitesse de rotation W au plateau supérieur faisant ainsi subir au film une contrainte; cette contrainte est transmise au plateau inférieur sur lequel sont placés des capteurs de force. Cette contrainte peut se décomposer en deux forces:

— une force Fx qui tend à ramener les axes dans le prolongement l'un de l'autre; cette force est proportionnelle au module élastique

— une force Fy perpendiculaire à Fx et proportionnelle au module visqueux.

Le module élastique G' est donné par la formule:

$$G' = Fx \cdot \frac{1}{\pi R^2} \cdot \frac{h}{a}$$

La mesure est faite en fixant W à 0,4 rd/s et le rapport h/a à 40, à une température de 40°C ou 50°C.

Le tableau VI indique le traitement subi par les films de latex des exemples 20 à 23 avant mesure du module élastique, ainsi que les résultats de cette mesure.

TABLEAU I

| EX. | % en poids dans monomères | | | Monomères/ toluène | Durée | Conversion | % en poids dans copolymères | | |
|---|---|---|---|---|---|---|---|---|---|
| | MEF | S | A Bu | en % | | en % | MEF | S | A Bu |
| 2 | 50 | 50 | — | 25 | 1 h | 13,0 | 54 | 46 | — |
| 3 | 50 | 50 | — | 25 | 2 h | 25,2 | 55 | 45 | — |
| 4 | 50 | 50 | — | 25 | 4 h | 40,1 | 54 | 46 | — |
| 5 | 50 | 50 | — | 25 | 6 h | 49,6 | 55 | 45 | — |
| 6 | 50 | 50 | — | 25 | 8 h | 50,2 | 51 | 49 | — |
| 7 | 50 | — | 50 | 25 | 1 h | 28,6 | 66 | — | 34 |
| 8 | 50 | — | 50 | 25 | 2 h | 38,0 | 60 | — | 40 |
| 9 | 50 | — | 50 | 25 | 4 h | 51,6 | 57 | — | 43 |
| 10 | 50 | — | 50 | 25 | 6 h | 66,3 | 52 | — | 48 |
| 11 | 50 | — | 50 | 50 | 2 h | 62,8 | — | — | — |
| 12 | 50 | — | 50 | 50 | 2 h 30 | 66,7 | — | — | — |
| 13 | 50 | 25 | 25 | 25 | 1 h | 15,7 | 54 | 29 | 17 |
| 14 | 50 | 25 | 25 | 25 | 2 h | 27,9 | 53 | 31 | 16 |
| 15 | 50 | 25 | 25 | 25 | 4 h | 41,7 | 47 | 32 | 21 |
| 16 | 50 | 25 | 25 | 25 | 6 h | 49,4 | 49 | 31 | 20 |
| 17 | 50 | 25 | 25 | 25 | 9 h | 56,4 | 50 | 29 | 21 |

TABLEAU II

| Film | I.G. | T.G. en % |
|---|---|---|
| a | — | 0 |
| b | 284 | 1,5 |
| c | 57 | 21,2 |
| d | 36,8 | 46,0 |
| e | 28,7 | 59,3 |
| f | 25,1 | 70,3 |
| g | 17,4 | 94,1 |
| h | 20,0 | 77,1 |
| i | 77 | 3,2 |

TABLEAU III

| Exemple | parties en poids dans monomères | | | | Taux conversion | E.S. | pH | ∅ | Tg |
|---|---|---|---|---|---|---|---|---|---|
| | ABu | S | AA | MEF | % | % | | µm | |
| 20 | 50,0 | 45,5 | 4,0 | — | 99,6 | 51,6 | 2,3 | 0,016 | +18 |
| 21 | 50,0 | 41,5 | 4,0 | 4,0 | 99,5 | 51,0 | 2,3 | 0,125 | +11 |
| 22 | 45,5 | 25,0 | 4,0 | 25,0 | 98,9 | 50,1 | 1,8 | 0,113 | +14 |
| 23 | 45,5 | 25,0 | 4,0 | 25,0 | 98,6 | 50,6 | 1,7 | 0,112 | +14 |

E.S. signifie extrait sec.
∅ signifie diamètre moyen des particules.

TABLEAU III'

| Exemple | parties en poids dans monomères | | | | | Taux conversion | E.S. | pH | ∅ | Tg |
|---|---|---|---|---|---|---|---|---|---|---|
| | ABu | S | AA | MEF | APF | | % | | µm | |
| 24 | 50 | 40,5 | 4 | 5 | — | 98,8 | 48 | 2,1 | 0,11 | + 9° |
| 25 | 50 | 40,5 | 4 | — | 5 | 99,4 | 49 | 2,1 | 0,115 | +10° |
| 26 | 50 | 35,5 | 4 | — | 10 | 98,8 | 49,9 | 2 | 0,109 | + 6° |
| 27 | 50 | 35,5 | 4 | 10 | — | 97,8 | 50,1 | 2 | 0,111 | + 6° |

E.S. signifie extrait sec.
∅ signifie diamètre moyen des particules.

TABLEAU IV

| Traitement film | | Exemple 20 | | Exemple 22 | | Exemple 23 | |
|---|---|---|---|---|---|---|---|
| | | TG % | IG | TG % | IG | TG % | IG |
| 25°C | 24 h | 0 | 0 | 61,9 | 8,7 | 60,9 | 7,0 |
| | 8 jours | 0 | 0 | 97,8 | 5,8 | 85,8 | 6,4 |
| 50°C | 1 h | 0 | 0 | 63,8 | 9,3 | 63,6 | 9,0 |
| | 24 h | 0 | 0 | 77,8 | 6,3 | 69,6 | 7,6 |
| 100°C | 1 h | 0 | 0 | 76,2 | 6,2 | 71,4 | 6,3 |
| | 8 h | 0 | 0 | 82,4 | 6,0 | 79,3 | 5,1 |

TABLEAU V

| Traitement | | Dureté PERSOX en s des latex des exemples | | | | | | | |
|---|---|---|---|---|---|---|---|---|---|
| T° C | Durée | 20 | 21 | 22 | 23 | 24 | 25 | 26 | 27 |
| | 6 h | 120 | 83 | — | — | — | — | — | — |
| | 24 h | 126 | 91 | 91 | 89 | 57 | 78 | 47 | 56 |
| | 48 h | 126 | 98 | — | — | 70 | 90 | 65 | 71 |
| | 72 h | 127 | 105 | — | — | 85 | 109 | 82 | 90 |
| 23°C | 7 j | — | — | — | — | 125 | 130 | 97 | 111 |
| | 10 j | 127 | 120 | 122 | 118 | — | — | — | — |
| | 20 j | 127 | 127 | — | — | — | — | — | — |
| | 35 j | 127 | 132 | — | — | — | — | — | — |
| | 47 j | 127 | 138 | 142 | 130 | — | — | — | — |
| | 2 mois | 126 | 142 | 143 | 130 | — | — | — | — |
| | 4 mois | 120 | 152 | — | — | — | — | — | — |
| | 1 h | 120 | 85 | — | — | 60 | 81 | 50 | 60 |
| | 2 h | 126 | — | — | — | 76 | 91 | 76 | 70 |
| 50°C | 6 h | 127 | 112 | — | — | — | — | — | — |
| | 8 h | 129 | — | — | — | 107 | 106 | 107 | 127 |
| | 24 h | 130 | 127 | — | — | 126 | 117 | 126 | 144 |
| | 48 h | 131 | — | — | — | 134 | 127 | 136 | 155 |
| | 72 h | 133 | — | — | — | 137 | 130 | 141 | 157 |
| | 1 h | 125 | | | | 110 | 115 | 100 | 136 |
| | 2 h | 130 | | | | 120 | 124 | 116 | 145 |
| 100°C | | | | | | | | | |
| | 8 h | 130 | | | | 128 | 129 | 123 | 150 |
| | 24 h | 131 | | | | 130 | 137 | 132 | 165 |
| | 48 h | 133 | | | | 148 | 140 | 146 | 166 |
| | 72 h | 135 | | | | 151 | 148 | 151 | 173 |

TABLEAU VI

| Traitement du film à tester | | T° C de la mesure | Module G' en N/$m^2$ des latex des exemples | | | |
|---|---|---|---|---|---|---|
| T° C | Durée | | 20 | 21 | 22 | 23 |
| | 24 h | | 16 000 | 14 000 | 16 800 | 16 000 |
| 23°C | 48 h | 40°C | 15 800 | 16 300 | — | — |
| | 10 j | | — | — | 20 000 | 24 000 |
| | 35 j | | 15 400 | 18 700 | | — |
| | 1 h 30 | | 14 200 | 16 800 | 22 400 | 18 000 |
| 50°C | 24 h | 50°C | 13 600 | 19 200 | — | — |
| | 72 h | | 13 200 | 20 000 | 28 000 | 24 000 |
| | 3 h 30 | | 17 200 | — | 24 000 | 20 000 |
| 50°C | 12 h | 40°C | — | — | 25 600 | 29 600 |
| | 14 h | | 16 800 | — | 32 000 | 34 000 |

**Revendications**

1. Polymères réticulables caractérisés en ce qu'ils sont constitués de:

. 1 à 100% de motifs dérivés d'un ester insaturé de l'acide furoïque de formule:

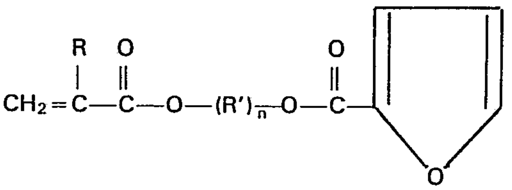 (I)

où

. R représente de l'hydrogène ou un groupe alkyle en $C_1$-$C_2$

. R' représente un radical alkylène linéaire ou ramifié en $C_1$-$C_5$

. n représente un nombre entier allant de 1 à 4

. et 0 à 99% de motifs dérivés d'au moins un monomère insaturé copolymérisable avec ledit ester insaturé de formule I.

2. Polymères réticulables selon la revendication 1, caractérisés en ce qu'ils sont constitués de:

. 1 à 50% de motifs dérivés d'ester insaturé de l'acide furoïque de formule (I)

. et de 50 à 99% de motifs dérivés d'au moins un monomère insaturé copolymérisable avec ledit ester insaturé de formule (I).

3. Polymère réticulables selon la revendication 1 ou 2, caractérisé en ce que dans la formule I, R représente un groupe alkyle en $C_1$.

4. Polymères réticulables selon l'une quelconque des revendications précédentes, caractérisé en ce que dans la formule I, R' représente un radical alkylène linéaire ou ramifié en $C_2$-$C_4$.

5. Polymères réticulables selon l'une quelconque des revendications précédentes caractérisés en ce que dans la formule I n est égal à 1.

6. Polymères réticulables selon l'une quelconque des revendications précédentes, caractérisé en ce que l'ester insaturé de l'acide furoïque de formule I est l'acrylate ou le méthacrylate de 2-éthylfuroate, un acrylate ou méthacrylate d'isopropylfuroate.

7. Polymère réticulables selon l'une quelconque des revendications précédentes caractérisés en ce que le monomère est un diène conjugué, un monomère acrylique ou méthacrylique, un monomère vinylaromatique, un mono-ou un di-acide carboxylique présentant au moins une insaturation éthylénique, un halogénure de vinyle ou de vinylidène, un ester vinylique d'acide carboxylique ou un acide sulfonique insaturé.

8. Polymères réticulables selon la revendication 7, caractérisés en ce que le monomère est de butadiène, de l'acrylate de butyle, du styrène ou de l'acide acrylique.

9. Polymère réticulables en dispersion aqueuse caractérisés en ce que ladite dispersion contient de 1 à 65% en poids d'extrait sec constitué de particules des polymères réticulables faisant l'objet de l'une quelconque des revendications 1 à 8.

10. Polymères réticulables en dispersion aqueuse selon la revendication 9, caractérisés en ce que le poids d'extrait sec est de 45-55% par rapport au poids de dispersion aqueuse.

11. Polymères réticulables en dispersion aqueuse selon la revendication 9 ou 10, caractérisé en ce que les particules de polymères réticulables présentent un diamètre de 0,05-3,0 µm.

12. Polymère réticulables en dispersion aqueuse selon la revendication 11, caractérisé en ce que le diamètre des particules est de 0,1-0,2 µm.

13. Procédé de préparation des polymères réticulables faisant l'objet de l'une quelconque des revendications 1 à 12, caractérisé en ce qu'une composition monomère constituée de:

. 1 à 100% de l'ester insaturé de l'acide furoïque de formule I

. et 0 à 99% d'au moins un desdits monomères insaturés non hydrolysables copolymérisables avec ledit ester de formule I, est polymérisée en émulsion aqueuse en présence d'un amorceur hydrosoluble et éventuellement d'un émulsifiant et en ce que les particules de polymères réticulables sont éventuellement séparées du milieu réactionnel.

14. Procédé selon la revendication 13, caractérisé en ce que la quantité d'amorceur est comprise entre 0,05 et 2% en poids par rapport au poids de la composition monomère.

15. Procédé selon la revendication 13 ou 14, caractérisé en ce que la quantité d'émulsifiant est comprise entre 0,01 et 5% par rapport au poids de la composition monomère.

16. Procédé selon l'une quelconque des revendications 13 à 15 caractérisé en ce que l'opération de polymérisation est réalisée à une température comprise entre 0 et 110°C.

17. Procédé selon la revendication 16, caractérisé en ce que l'opération de polymérisation est réalisée à une température comprise entre 20 et 90°C.

18. Application des polymères réticulables faisant l'objet de l'une quelconque des revendications 1 à 12 à la fabrication de revêtements.

**Patentansprüche**

1. Vernetzbare Polymere, dadurch gekennzeichnet, dass sie bestehen aus:

— 1 bis 100% Gruppen, die von einem ungesättigten Ester einer Furancarbonsäure der Formel:

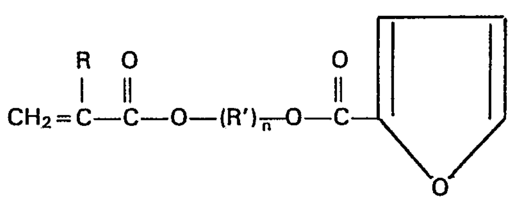 (I)

abgeleitet sind

in der

— R ein Wasserstoffatom oder eine Alkylgruppe mit $C_1$-$C_2$ darstellt

— R' einen linearen oder verzweigten Alkylenrest mit $C_1$-$C_5$ darstellt

— n eine ganze Zahl von 1 bis 4 darstellt

— und 0 bis 99% Gruppen, die von wenigstens einem ungesättigten mit diesem ungesättigten Ester

der Formel I copolymerisierbaren Monomeren abgeleitet sind.

2. Vernetzbare Polymere nach Anspruch 1, dadurch gekennzeichnet, dass sie bestehen aus:

— 1 bis 50& der von einem ungesättigten Ester der Furancarbonsäure der Formel I abgeleiteten Gruppen

— und 50 bis 99% der von wenigstens einem ungesättigten mit diesem ungesättigten Ester der Formel I copolymerisierbaren Monomeren abgeleiteten Gruppen.

3. Vernetzbare Polymere nach Anspruch 1 oder 2, dadurch gekennzeichnet, dass in der Formel I R eine $C_1$-Alkylgruppe darstellt.

4. Vernetzbare Polymere nach einem der vorhergehenden Ansprüche, dadurch gekennzeichnet, dass in der Formel I R' einen linearen oder verzweigten Alkylenrest mit $C_2$-$C_4$ darstellt.

5. Vernetzbare Polymere nach einem der vorhergehenden Ansprüche, dadurch gekennzeichnet, dass in der Formel I n gleich 1 ist.

6. Vernetzbare Polymere nach einem der vorhergehenden Ansprüche, dadurch gekennzeichnet, dass der ungesättigte Ester der Furancarbonsäure der Formel I das Acrylat oder Methacrylat des 2-Ethylfuroats ist oder ein Acrylat oder Methacrylat eines Isopropylfuroats.

7. Vernetzbare Polymere gemäss einem der vorhergehenden Ansprüche, dadurch gekennzeichnet, dass das Monomer ein konjugiertes Dien, ein acrylisches oder methacrylisches Monomer, ein vinylaromatisches Monomer, eine Mono- oder Dicarbonsäure mit wenigstens einer ungesättigten ethylenischen Bindung, ein Vinyl- oder Vinylidenhalogenid, ein Vinylester einer Carbonsäure oder eine ungesättigte Sulfonsäure ist.

8. Vernetzbare Polymere nach Anspruch 7, dadurch gekennzeichnet, dass das Monomer Butadien, Butylacrylat, Styrol oder Acrylsäure ist.

9. Vernetzbare Polymere in wässriger Dispersion, dadurch gekennzeichnet, dass diese Dispersion 1 bis 65 Gew.-% eines trockenes Extrakts bestehend aus Partikeln von vernetzbaren Polymeren enthält, die Gegenstand eines der Ansprüche 1 bis 8 sind.

10. Vernetzbare Polymere in wässriger Dispersion nach Anspruch 9, dadurch gekennzeichnet, dass das Gewicht des trockenen Extrakts 45 bis 55% bezogen auf das Gewicht der wässrigen Dispersion beträgt.

11. Vernetzbare Polymere in wässriger Dispersion nach Anspruch 9 oder 10, dadurch gekennzeichnet, dass die Partikel der vernetzbaren Polymeren einen Durchmesser von 0,05 bis 3,0 µm aufweisen.

12. Vernetzbare Polymere in wässriger Dispersion nach Anspruch 11, dadurch gekennzeichnet, dass der Durchmesser der Partikel 0,1 bis 0,2 µm beträgt.

13. Verfahren zur Herstellung von vernetzbaren Polymeren, die Gegenstand eines der Ansprüche 1 bis 12 sind, dadurch gekennzeichnet, dass eine monomere Zusammensetzung bestehend aus:

— 1 bis 100% eines ungesättigten Esters der Furancarbonsäure der Formel I

— und 0 bis 99% wenigstens eines der genannten ungesättigten nicht hydrolysierbaren Monomeren, die mit diesem Ester der Formel I copolymerisierbar sind,

in wässriger Emulsion in Gegenwart eines wasserlöslichen Starters und gegebenenfalls eines Emulgators polymerisiert wird und dass die Partikel dieser vernetzbaren Polymeren gegebenenfalls aus dem Reaktionsmilieu abgetrennt werden.

14. Verfahren nach Anspruch 13, dadurch gekennzeichnet, dass die Menge des Starters zwischen 0,05 und 2 Gew.-%, bezogen auf das Gewicht der monomeren Zusammensetzung, beträgt.

15. Verfahren nach Anspruch 13 oder 14, dadurch gekennzeichnet, dass die Menge des Emulgators zwischen 0,01 und 5%, bezogen auf das Gewicht der monomeren Zusammensetzung, beträgt.

16. Verfahren nach einem der Ansprüche 13 bis 15, dadurch gekennzeichnet, dass der Polymerisationsschritt bei einer Temperatur zwischen 0 und 110°C durchgeführt wird.

17. Verfahren nach Anspruch 16, dadurch gekennzeichnet, dass der Polymerisationsschritt bei einer Temperatur zwischen 20 und 90°C durchgeführt wird.

18. Verwendung der vernetzbaren Polymeren, die Gegenstand eines der Ansprüche 1 bis 12 sind, zur Herstellung von Beschichtungen.

**Claims**

1. Cross-linkable polymers characterised in that they comprise:

— from 1 to 100% of units derived from an unsaturated ester of furonic acid of the following formula:

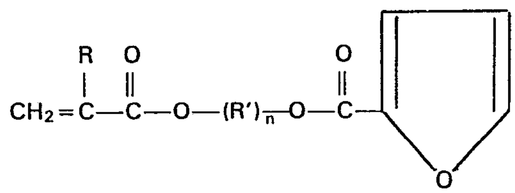

(I)

wherein:

. R represents hydrogen or a $C_1$-$C_2$ alkyl group,

. R' represents a $C_1$-$C_5$ straight or branched chain alkylene radical, and

. n reprensents an integer of from 1 to 4,

— and from 0 to 99% of units derived from at least one unsaturated monomer co-polymerisable with said unsaturated ester of fromula (I).

2. Cross-linkable polymers according to claim 1 characterised in that they comprise:

— from 1 to 50% of units derived from unsaturated ester of furoic acid of formula (I), and

— from 50 to 99% of units derived from at least one unsaturated monomer co-polymerisable with said unsaturated ester of formula (I).

3. Cross-linkable polymers according to claim 1 or claim 2, characterised in that in formula I, R represents a $C_1$ alkyl group.

4. Cross-linkable polymers according to any of the preceding claims characterised in that in formula I, R' represents a $C_2$-$C_4$ straight or branched chain alkylene radical.

5. Cross-linkable polymers according to any one of the preceding claims characterised in that in formula I, n is equal to 1.

6. Cross-linkable polymers according to any one of the preceding claims characterised in that the unsaturated ester of furonic acid of formula I is 2-ethylfuroate acrylate or methacrylate or an isopropylfuroate acrylate or methacrylate.

7. Cross-linkable polymers according to any one of the preceding claims characterised in that the monomer is a conjugate diene, an acrylic or methacrylic monomer, a vinyl aromatic monomer, a carboxylic mono- or di-acid having at least one ethylenic unsaturation, a vinyl or vinylidene halide, a vinyl ester of carboxylic acid or an unsaturated sulphonic acid.

8. Cross-linkable polymers according to claim 7 characterised in that the monomer is butadiene, butyl acrylate, styrene or acrylic acid.

9. Cross-linkable polymers in aqueous dispersion characterised in that said dispersion contains from 1 to 65% by weight of dry extract formed by particles of cross-linkable polymers according to any one of claims 1 to 8.

10. Cross-linkable polymers in aqueous dispersion according to claim 9 characterised in that the weight of dry extract is 45 to 55% with respect to the weight of aqueous dispersion.

11. Cross-linkable polymers in aqueous dispersion according to claim 9 or claim 10 characterised in that the particles of cross-linkable polymers are from 0.05 to 3.0 µm in diamater.

12. Cross-linkable polymers in aqueous dispersion according to claim 11 characterised in that the diameter of the particles is from 0.1 to 0.2 µm.

13. A process for the preparation of cross-linkable polymers according to any one of claims 1 to 12 characterised in that a monomer composition formed by:

— from 1 to 100% of the unsaturated ester of furoic acid of formula I, and

— from 0 to 99% of at least one of said non-hydrolysable unsaturated monomers copolymerisable with said ester of formula I,

is polymerised in aqueous emulsion in the presence of a water-soluble seeding agent and optionally an emulsifying agent and that the particles od cross-linkable polymers are optionally separated from the reaction medium.

14. A process according to claim 13 characterised in that the amount of seeding agent is between 0.05 and 2% by weight with respect to the weight of the monomer composition.

15. A process according to claim 13 or claim 14 characterised in that the amount of emulsifying agent is between 0.01 and 5% with respect to the weight of the monomer composition.

16. A process according to any one of claims 13 to 15 characterised in that the polymerisation operation is carried out at a temperature of between 0 and 110°C.

17. A process according to claim 16 characterised in that the polymerisation operation is carried out at a temperature of between 20 and 90°C.

18. Use of the cross-linkable polymers according to any one of claims 1 to 12 for the production of coatings.